# EUROPÄISCHE PATENTSCHRIFT

(11) **EP 1 282 842 B1**
(45) Veröffentlichungstag und Bekanntmachung des Hinweises auf die Patenterteilung: **08.06.2005**
(21) Anmeldenummer: 01921204.2
(22) Anmeldetag: 15.03.2001
(51) Int. Cl.: G05B 19/042

(54) **VERFAHREN ZUR STEUERUNG VON GERÄTEN IM KOMMUNIKATIONSNETZ EINES KRAFTFAHRZEUGES**
METHOD FOR CONTROLLING DEVICES IN A COMMUNICATIONS NETWORK OF AN AUTOMOBILE
PROCEDE DE COMMANDE D'APPAREILS ET APPAREIL D'UN RESEAU DE COMMUNICATION D'UN VEHICULE AUTOMOBILE

(30) Priorität: 09.05.2000 DE 10022423
(43) Veröffentlichungstag der Anmeldung: 12.02.2003
(73) Patentinhaber: ROBERT BOSCH GMBH, 70442 Stuttgart (DE)
(72) Erfinder: VOLLMER, Vasco, 29471 Gartow (DE); BAIERL, Wolfgang, 73630 Remshalden (DE)
(86) Internationale Anmeldenummer: PCT/DE2001/000990
(87) Internationale Veröffentlichungsnummer: WO 2001/086362

(56) Entgegenhaltungen:
- EP-A- 0 513 443
- EP-A- 0 874 343
- WO-A-00/13344
- WO-A-99/31814
- WO-A-99/56201
- DE-A- 19 709 800

## Beschreibung

### Stand der Technik

Die Erfindung geht aus von einem Verfahren zur Steuerung von Geräten bzw. von einem Gerät in einem Kommunikationsnetz in einem Kraftfahrzeug nach der Gattung der unabhängigen Patentansprüche.

Es ist bereits bekannt, Kommunikationsnetze in Kraftfahrzeugen einzusetzen. Diese Kommunikationsnetze dienen zur Verbindung von steuerbaren Geräten und Sensoren. Die steuerbaren Geräte sind insbesondere Infotainmentgeräte, wie ein Autoradio, Navigationsgeräte und Geräte zur Wiedergabe von Tonträgern.

Als eine Technologie für Kommunikationsnetze im Kraftfahrzeug wird ein serielles Bussystem nach IEEE 1394 vorgeschlagen. Dabei sind die Endgeräte mittels eines 4- bis 6-adrigen Kabels oder mittels eines Lichtwellenleiters miteinander verbunden. In dem Bus finden sich Endstücke als Blatt bezeichnet, Relaisknoten als Zweig bezeichnet und der oberste Knoten wird schließlich als Wurzel bezeichnet. Dieses Bussystem ist selbstkonfigurierend, d.h. alle Knoten im Bussystem senden Informationen über sich selbst an die anderen Knoten. Einem oder mehreren Knoten kann das Busmanagement übertragen werden. Bei mehreren Knoten, die für das Busmanagement vorgesehen sind, wird ein Wettbewerb durchgeführt, wobei der Sieger dieses Wettbewerbs das Busmanagement übernimmt. Auf den einzelnen Knoten läuft eine Betriebssoftware, die den Betrieb des Kommunikationsnetzes ermöglicht.

### Vorteile der Erfindung

Das erfindungsgemäße Verfahren zur Steuerung von Geräten bzw. das erfindungsgemäße Gerät in einem Kommunikationsnetz in einem Kraftfahrzeug mit den Merkmalen des unabhängigen Patentanspruchs hat demgegenüber den Vorteil, dass mittels eines generischen Kontrollmoduls für ein neu in das Kommunikationsnetz hinzugekommenes Gerät eine gerätespezifische Kontrollkomponente bei Bedarf erzeugt wird, wobei in dem Gerät abgespeicherte Daten berücksichtigt werden, wodurch eine Steuerung und eine aktive Einbindung des neuen Geräts in das Kommunikationsnetz ermöglicht wird. Dieser Vorgang wird ohne das Bereitstellen einer Laufzeitumgebung bewerkstelligt. Dies führt zu einem reduzierten Aufwand. Die Betriebssoftware ist dabei gegebenenfalls auf verschiedenen Geräten des Kommunikationsnetzes plaziert, um die Funktion des Geräts zu gewährleisten.

Insbesondere ist das erfindungsgemäße Verfahren für den Anschluß von Geräten über eine Funkschnittstelle oder eine Infrarotschnittstelle geeignet, da über solche Schnittstellen häufig neue Geräte angeschlossen werden.

Durch die in den abhängigen Ansprüchen aufgeführten Maßnahmen und Weiterbildungen sind vorteilhafte Verbesserungen des im unabhängigen Patentanspruch angegebenen Verfahrens zur Steuerung von Geräten bzw. Geräts in einem Kommunikationsnetz in einem Kraftfahrzeug möglich.

Besonders vorteilhaft ist, dass die gerätespezifische Kontrollkomponente unabhängig von dem Kontrollmodul verwendet wird. Damit ist es vorteilhafterweise möglich, dass das Kontrollmodul und die gerätespezifische Kontrollkomponente unabhängig voneinander abgespeichert sind und damit nicht notwendigerweise in demselben Gerät gehalten werden müssen. Ein Gerät bezeichnet hier eine an einen Bus angeschlossene Komponente.

Alternativ ist es von Vorteil, die gerätespezifische Kontrollkomponente dem generischen Kontrollmodul hinzuzufügen. Damit wird das generische Kontrollmodul befähigt, die Steuerung des neuen Geräts durchzuführen. Voraussetzung ist dabei, dass das generische Kontrollmodul dabei zur Steuerung aller Geräte verwendet wird, wobei hier alternativ generische Kontrollmodule bei verschiedenen Systemmanagern oder Gateways gehalten werden können.

Dabei ist es vorteilhaft, dass die generische Kontrollkomponente in Gateways abgespeichert wird und damit eine übergeordnete Funktion in zentralen Knoten im Kommunikationsnetz erhält.

Weiterhin ist es von Vorteil, dass die gerätespezifische Kontrollkomponente die im Fahrzeug vorhandene Mensch-Maschine-Schnittstelle automatisch oder interaktiv an das neu hinzugekommene Gerät anpasst. Damit wird die zusätzliche Funktionalität, die durch das neu hinzugekommene Gerät realisiert wird, einem Benutzer vorteilhafterweise sofort sichtbar.

Desweiteren ist es von Vorteil, dass das Kommunikationsnetz als Bussystem ausgeführt wird, da Bussysteme in Fahrzeugen eine vorteilhafte Netztechnologie darstellen, um verschiedene Geräte miteinander zu verbinden und um insbesondere in einfacher Weise neu hinzukommende Geräte in ein Kommunikationsnetz einzubinden. Dabei ist es besonders von Vorteil, dass das Bussystem nach dem Standard IEEE 1394 ausgeführt ist, da dies ein Standard für die Unterhaltungselektronikindustrie ist.

Weiterhin ist es von Vorteil, dass die im neu hinzukommenden Gerät abgespeicherten Daten, die mit diesem Gerät verbundenen Funktionen, für den Betrieb notwendige Parameter zulässige Wertebereiche, die notwendige Auflösung und die zeitlichen Abfolgen bei der Abarbeitung von Befehlen beinhalten. Damit wird der Betrieb des neu hinzugekommenen Gerätes mit einem minimalen Speicheraufwand und Datenbestand definiert, wobei diese Daten zur Erzeugung der gerätespezifischen Kontrollkomponente verwendet werden.

Schließlich ist es auch von Vorteil, dass ein Gerät, vorzugsweise ein Gateway, vorliegt, das die Betriebssoftware mit dem generischen Kontrollmodul aufweist, so dass das Gateway die Daten von den weiteren, an das Kommunikationsnetz angeschlossenen Geräte über das Kommunikationsnetz abruft, und damit die gerätespezifische Kontrollkomponente erzeugt, mittels derer dann das jeweilige weitere Gerät steuerbar ist.

### Zeichnung

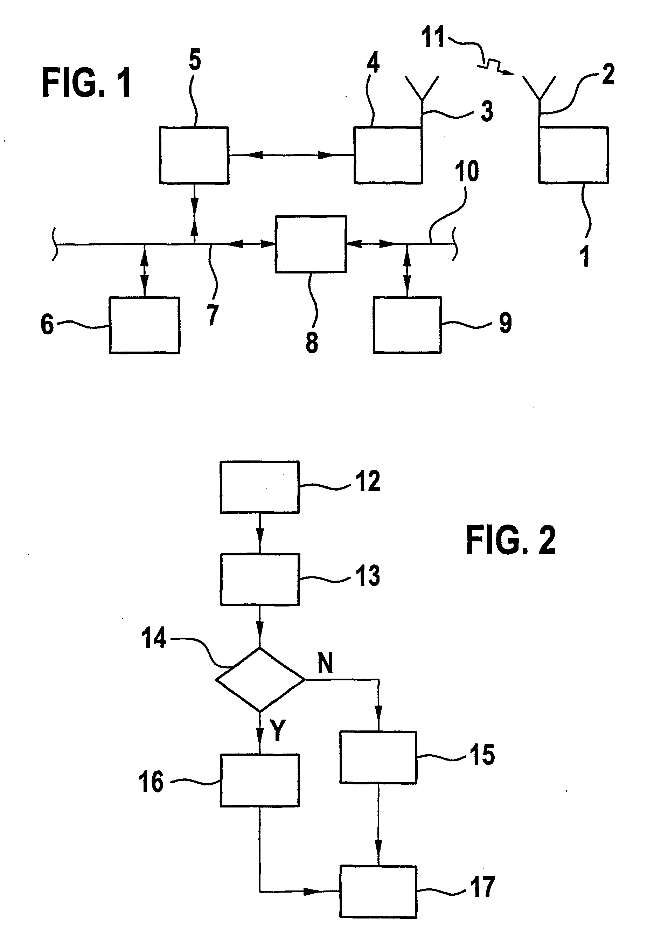

Ausführungsbeispiele der Erfindung sind in der Zeichnung dargestellt und in der nachfolgenden Beschreibung näher erläutert. Es zeigt Figur 1 den Aufbau des Kommunikationsnetzes und Figur 2 das erfindungsgemäße Verfahren als Flußdiagramm.

### Beschreibung

Durch die stetige Zunahme von vorhandenen Kommunikationsnetzen in Kraftfahrzeuge, um unterschiedlichste Geräte, wie Autoradio, Abspielgeräte von Tonträgern, Navigationsgeräte und Ortungsvorrichtungen miteinander zu verbinden, wird die einfache Installation eines neu hinzugekommenen Gerätes notwendig.

Erfindungsgemäß wird daher in dem Kommunikationsnetz ein generisches Kontrollmodul vorgesehen, das mittels in den im Gerät abgespeicherten Daten gerätespezifische Kontrollkomponenten erzeugt, die eine Steuerung dieser Geräte ermöglichen. Die Steuerung wird dann insbesondere für andere Anwendungen möglich, die sich dieser gerätespezifischen Kontrollkomponente bedienen. Die Anwendungen sind entweder Geräte mit Software oder auch andere Softwareprogramme, die auf dem zu steuernden Gerät laufen.

Durch Verteilen der gerätespezifischen Kontrollkomponenten auf die einzelnen Geräte oder auf Systemmanager oder auf Gateways wird eine jeweils geeignete Konfiguration erreicht. Eine Alternative stellt das Hinzufügen der gerätespezifischen Komponente zu dem generischen Kontrollmodul dar. Die im Gerät abgespeicherten Daten definieren genau die mögliche Funktionen, die mit diesem Gerät möglich sind und geben für den Betrieb notwendige Parameter, Wertebereiche, Auflösungen und Zeitabläufe wieder. Diese Daten werden daher insbesondere für die Erzeugung von gerätespezifischen Kontrollkomponenten verwendet.

In Figur 1 ist eine Konfiguration eines Kommunikationsnetzes in einem Kraftfahrzeug dargestellt. Hier sind beispielhaft drei verschiedene Netztechnologien verwendet worden: eine Funkverbindung 11, ein Bus 7 und ein weiterer Bus 10. Gateways stellen die Schnittstellen zwischen diesen unterschiedlichen Kommunikationsnetztechnologien dar. Gateways sorgen insbesondere dafür, dass ein unberechtigter Zugriff auf ein Kommunikationsnetz vermieden wird.

Über die Funkverbindung 11 ist ein portabler Computer mit seiner angeschlossenen Antenne 2 an ein Gateway 4 über seine Antenne 3 verbunden. Alternativ ist es hier möglich, eine Infrarotfreiraumübertragung vorzusehen. In diesem Fall weist der portable Computer 1 einen Infrarotsender und -empfänger auf, was dann auch das Gateway 4 aufweist. Alternativen für den portablen Computer stellen ein Mobiltelefon, ein persönlicher digitaler Assistent oder ein Gerät in einem weiteren Kommunikationsnetz dar.

Das Gateway 4 ist über einen Datenein-/-ausgang über eine Leitung mit einem ersten Datenein-/-ausgang eines Systemmanagers 5 verbunden. Der Systemmanager 5 führt die Steuerung der an die Bussysteme 7 und 10 angeschlossenen Geräte durch. Der Systemmanager 5 kann alternativ mit dem Gateway 4 auf einem Rechner im Kraftfahrzeug implementiert sein.

Der Systemmanager 5 ist über einen zweiten Datenein-/ausgang mit dem Bus 7 verbunden. An den Bus 7 ist über einen Datenein-/-ausgang ein CD-Spieler 6 angeschlossen. Der Bus 7 ist an einen Datenein-/-ausgang des Gateways 8 angeschlossen. Das Gateway 8 ist über einen zweiten Datenein-/-ausgang an den Bus 10 angeschlossen. An den Bus 10 ist über einen Datenein-/-ausgang eine Ortungsvorrichtung 9 angeschlossen.

Alternativ ist es möglich, an die Bussysteme 7 und 10 weitere Komponenten wie Navigationsgeräte, Autoradios oder Minidisc-Spieler anzuschließen. Die Gateways 4 und 8 sorgen dafür, dass ein kontrollierter und erlaubter Zugriff von einer Netzwerktechnologie auch die andere Netzwerktechnologie ermöglicht wird. Nicht autorisierte Netzwerkzugriffe werden durch diese Gateways 4 und 8 verhindert. Ein an die Bussysteme 7 und 10 angeschlossenes Gerät weist einen Buscontroller auf, der die Datenkommunikation über das jeweilige Bussystem steuert.

In Figur 2 ist das erfindungsgemäße Verfahren zur Steuerung von Geräten in einem Kommunikationsnetz in einem Kraftfahrzeug als Flußdiagramm dargestellt. Insbesondere bei der Hinzunahme von neuen Geräten wird im Bedarfsfall nach dem erfindungsgemäßen Verfahren eine gerätespezifische Kontrollkomponente erzeugt, die die Steuerung dieses neu hinzugekommenen Geräts ermöglicht. Hier ist der CD-Spieler 6 neu an den Bus 7 angeschlossen worden und soll nun über den portablen Computer 1 und den Systemmanager 5 gesteuert werden. Da noch keine gerätespezifische Kontrollkomponente für den CD-Spieler 6 vorliegt, muß diese nun erzeugt werden.

In Verfahrensschritt 12 wird erkannt, dass ein neues Gerät, hier der CD-Spieler 6, an den Bus 7 angeschlossen wurde. Dies wird durch den Systemmanager 5 erkannt, auf dem das generische Kontrollmodul läuft. Dazu sendet ein an den Bus 7 neu angeschlossenes Gerät Daten, die es als neues Gerät identifizieren und anmelden. Das generische Kontrollmodul ist in der Lage, mittels in einem Gerät abgespeicherter Daten die gerätespezifische Kontrollkomponente für dieses Gerät zu erzeugen.

In Verfahrensschritt 13 wird daher die gerätespezifische Kontrollkomponente mittels der im CD-Spieler 6 abgespeicherten Daten und dem generischen Kontrollmodul erzeugt. Zu diesen Daten gehören die Funktionen bzw. Befehle des CD-Spielers 6, wobei Funktionen aus mehreren Befehlen zusammengesetzt werden können. Beim CD-Spieler ist das Herausfahren der CD, Abspielen der CD, Pause, Stop, ein zufälliges Abspielen von verschiedenen Titeln, ein Abspeichern von verschiedenen Titeln und die Ausgabe von CD-Text. Diese Funktionen sind also in dem Gerät bereits abgespeichert, wie auch vorgegebene Verarbeitungszeiten und zeitliche Abhängigkeiten, die zwischen einzelnen Befehlen einer Funktion vorgegeben sind. Daneben werden Parameter, Wertebereiche einer Auflösung und physikalische Einheiten in dem Gerät abgespeichert, mittels derer die gerätespezifische Kontrollkomponente, also die Kontrollkomponente für den CD-Spieler 6, erzeugt wird. Die gerätespezifischen Daten sind dabei im CD-Spieler 6 in einer definierten Struktur abgelegt. Die Befehle, die die Funktionen des Geräts ausmachen, werden in einer standardisierten, automatisch verarbeitbaren Sprache, die auch als Function Description Language (FDL) bekannt ist, abgespeichert. Auch die Parameter, die Wertebereiche, die Auflösung werden in FDL abgelegt. Zusätzliche Informationen über Verarbeitungszeiten und zeitliche Abhängigkeiten zwischen den Befehlen einer Funktion werden in FDL, beispielsweise mittels eines Flußdiagramms oder eines Zeitdiagramms, beschrieben.

In Verfahrensschritt 14 wird überprüft, ob die gerätespezifische Kontrollkomponente dem generischen Kontrollmodul im Systemmanager 5 hinzugefügt wird. Ist das nicht der Fall, wird in Verfahrensschritt 15 die gerätespezifische Kontrollkomponente in dem CD-Spieler 6, also dem Gerät selbst, abgespeichert und kann so von verschiedenen Steuerungsinstanzen, wie dem portablen Computer 1, verwendet werden. Dazu erhält der portable Computer 1 ein Softwareelement, mittels dessen die Steuerung über die gerätespezifische Kontrollkomponente möglich wird. Die gerätespezifische Kontrollkomponente kann auch an den portablen Computer 1 direkt übertragen werden und dann als Softwareelement verwendet werden.

Anschließend wird in Verfahrensschritt 17 eine Steuerung des CD-Spielers 6 durch den portablen Computer 1 vorgenommen. Wird in Verfahrensschritt 14 jedoch festgestellt, dass die gerätespezifische Kontrollkomponente dem generischen Kontrollmodul im Systemmanager 5 hinzugefügt werden soll, dann wird dies in Verfahrensschritt 16 durchgeführt, so dass die gerätespezifische Kontrollkomponente im generischen Kontrollmodul im Systemmanager 5 gespeichert wird. Der Systemmanager 5 weist auch die gerätespezifische Kontrollkomponente für die Ortungsvorrichtung 9 auf, die bereits erzeugt wurde. Solch eine gerätespezifische Kontrollkomponente ist hier bereits auf der Ortungsvorrichtung 9 von einem Hersteller der Ortungsvorrichtung 9 bereitgestellt worden.

Danach wird in Verfahrensschritt 17 die Steuerung des CD-Spielers 6 über den Systemmanager 5 und das nun erweiterte generische Kontrollmodul durchgeführt. In diesem Fall wird dem portablen Computer 1 ein Softwareelement, das unterschiedlich von dem generischen Kontrollmodul ist, überspielt, um die Steuerung zu gewährleisten. Dies hat Sicherheitsaspekte, denn verfügt der portable Computer 1 über das generische Kontrollmodul, das verschiedene gerätespezifische Kontrollkomponenten aufweist, ist eine Steuerung von anderen Komponenten möglich. Dies kann alternativ aber auch je nach Anwendungsfall gestattet sein.

Das erfindungsgemäße Verfahren ermöglicht es auch für ein über eine drahtlose Schnittstelle an das Kommunikationsnetz angeschlossenes Gerät ein gerätespezifisches Kontrollmodul zu erzeugen. Dabei ist die drahtlose Schnittstelle entweder als Funkschnittstelle oder als Infrarotschnittstelle ausgebildet. Bei einer Funkschnittstelle weist das anzuschließende Gerät und das Gateway, das die Daten von dem Gerät empfängt beziehungsweise Daten zu dem Gerät sendet, jeweils eine Sende-/-Empfangsvorrichtung und eine Antenne auf. Bei einer Infrarotschnitt weisen sowohl das Gerät als auch das Gateway einen Infrarotsender und einen Infrarotempfänger auf, wobei der Infrarotsender ein Laser oder eine Leuchtdiode sein kann, während für den Infrarotempfänger eine Photodiode Anwendung findet.

In einem Kraftfahrzeug hat ein Benutzer wenigstens ein Mensch-Maschine-Interface zur Steuerung der vorhandenen Infotainment-Komponenten. Wird nun ein neues Gerät hinzugefügt, dann wird automatisch mit der Erzeugung der gerätespezifischen Kontrollkomponente das Mensch-Maschine-Interface um die für dieses neue Gerät definierten Funktionen erweitert. Für den CD-Spieler 6 heißt dies, dass auf einer Anzeige im Kraftfahrzeug beispielsweise in einem Menü die Funktionen, die der CD-Spieler 6 gestattet, dargestellt und wählbar für einen Benutzer gemacht werden. Dies geschieht beispielsweise durch die bekannten Softkeys. Solche Softkeys sind frei programmierbar, so dass sie an neu hinzukommende Funktionen leicht angepaßt werden können.

## Patentansprüche

1. Verfahren zur Steuerung von Geräten, die an ein Kommunikationsnetz in einem Kraftfahrzeug angeschlossen sind, wobei eine Betriebssoftware auf einem Gerät des Kommunikationsnetzes bereitgestellt wird, **dadurch gekennzeichnet, dass** der Betriebssoftware ein generisches Kontrollmodul hinzugefügt wird, dass mittels des generischen Kontrollmoduls und mittels in wenigstens einem weiteren Gerät des Kommunikationsnetzes abgespeicherter Daten für das wenigstens eine weitere Gerät eine gerätespezifische Kontrollkomponente erzeugt wird und dass mittels der gerätespezifischen Kontrollkomponente das wenigstens eine weitere Gerät gesteuert wird.

2. Verfahren nach Anspruch 1, **dadurch gekennzeichnet, dass** die gerätespezifische Kontrollkomponente unabhängig von dem generischen Kontrollmodul eingesetzt wird.

3. Verfahren nach Anspruch 1, **dadurch gekennzeichnet, dass** die gerätespezifische Kontrollkomponente dem generischen Kontrollmodul hinzugefügt wird.

4. Verfahren nach Anspruch 2 oder 3, **dadurch gekennzeichnet, dass** das generische Kontrollmodul in einem Gateway (4, 8) des Kommunikationsnetzes eingesetzt wird.

5. Verfahren nach einem der vorhergehenden Ansprüche, **dadurch gekennzeichnet, dass** mittels der gerätespezifischen Kontrollkomponente die Mensch-Maschine-Schnittstelle im Kraftfahrzeug angepasst wird.

6. Verfahren nach einem der vorhergehenden Ansprüche, **dadurch gekennzeichnet, dass** als Kommunikationsnetz ein Bussystem (7, 10) verwendet wird.

7. Verfahren nach Anspruch 6, **dadurch gekennzeichnet, dass** als das Bussystem (7, 10) ein IEEE 1394 Bussystem eingesetzt wird.

8. Verfahren nach einem der vorhergehenden Ansprüche, **dadurch gekennzeichnet, dass** in dem wenigstens einen weiteren Gerät Funktionen, die aus mindestens einem Befehl bestehen, zur Steuerung der weiteren Geräte in einer automatisch verarbeitbaren Sprache, Parameter, Wertebereiche, Auflösungen und zeitliche Abhängigkeiten abgespeichert werden.

9. Gerät in einem Kommunikationsnetz in einem Kraftfahrzeug, wobei das Gerät eine Betriebssoftware aufweist, **dadurch gekennzeichnet, dass** die Betriebssoftware ein generisches Kontrollmodul aufweist, mittels dessen in wenigstens einem weiteren Gerät des Kommunikationsnetzes gespeicherte Daten abrufbar sind und mittels dessen für das wenigstens eine weitere Gerät eine jeweilige gerätespezifische Kontrollkomponente erzeugbar ist, und dass mit der gerätespezifischen Kontrollkomponente das wenigstens eine weitere Gerät steuerbar ist.

10. Gerät nach Anspruch 9, **dadurch gekennzeichnet, dass** das Gerät, das die Betriebssoftware aufweist, ein Gateway (4, 8) ist.

11. Weiteres Gerät nach Anspruch 9 oder 10, **dadurch gekennzeichnet, dass** das wenigstens eine weitere Gerät einen Speicher mit gerätespezifischen Daten aufweist, wobei die Daten über das Kommunikationsnetz im Kraftfahrzeug abrufbar sind, und dass die Daten zur Erzeugung der gerätespezifischen Kontrollkomponente verwendbar sind.

## Claims

1. Method for controlling devices which are connected to a communication network in a motor vehicle, where a piece of operating software is provided on a device in the communication network, **characterized in that** the operating software has a generic control module added to it, **in that** the generic control module and data stored in at least one further device in the communication network are used to produce a device-specific control component for the at least one further device, and **in that** the device-specific control component is used to control the at least one further device.

2. Method according to Claim 1, **characterized in that** the device-specific control component is used independently of the generic control module.

3. Method according to Claim 1, **characterized in that** the device-specific control component is added to the generic control module.

4. Method according to Claim 2 or 3, **characterized in that** the generic control module is used in a gateway (4, 8) in the communication network.

5. Method according to one of the preceding claims, **characterized in that** the device-specific control component is used to adjust the man/machine interface in the motor vehicle.

6. Method according to one of the preceding claims, **characterized in that** the communication network used is a bus system (7, 10).

7. Method according to Claim 6, **characterized in that** the bus system (7, 10) used is an IEEE 1394 bus system.

8. Method according to one of the preceding claims, **characterized in that** the at least one further device stores functions, which comprise at least one command, for controlling the further devices in an automatically processible language, parameters, value ranges, resolutions and time dependencies.

9. Device in a communication network in a motor vehicle, where the device has a piece of operating software, **characterized in that** the operating software has a generic control module which can be used to retrieve data stored in at least one further device in the communication network and which can be used to produce a respective device-specific control component for the at least one further device, and **in that** the device-specific control component can be used to control the at least one further device.

10. Device according to Claim 9, **characterized in that** the device which has the operating software is a gateway (4, 8).

11. Further device according to Claim 9 or 10, **characterized in that** the at least one further device has a memory containing device-specific data, the data being able to be retrieved via the communication network in the motor vehicle, and **in that** the data can be used to produce the device-specific control component.

## Revendications

1. Procédé de commande d'appareils reliés à un réseau de communication dans un véhicule automobile, selon lequel un logiciel d'exploitation est mis à disposition sur un appareil du réseau de communication,
**caractérisé en ce qu'** un module de contrôle générique est ajouté au logiciel d'exploitation, un composant de contrôle spécifique aux appareils est produit au moyen de ce module de contrôle générique et de données mémorisées dans au moins un autre appareil du réseau de communication pour au moins cet autre appareil, et ce dernier est commandé au moyen de ce composant de contrôle spécifique aux appareils.

2. Procédé selon la revendication 1,
**caractérisé en ce que** le composant de contrôle spécifique aux appareils est installé indépendamment du module de contrôle générique.

3. Procédé selon la revendication 1,
**caractérisé en ce que** le composant de contrôle spécifique aux appareils est ajouté au module de contrôle générique.

4. Procédé selon la revendication 2 ou 3,
**caractérisé en ce que** le module de contrôle générique est installé dans une passerelle (4, 8) du réseau de communication.

5. Procédé selon l'une quelconque des revendications précédentes,
**caractérisé en ce que** l'interface homme-machine dans le véhicule automobile est adaptée au moyen du composant de contrôle spécifique aux appareils.

6. Procédé selon l'une quelconque des revendications précédentes,
**caractérisé en ce qu'** un système de bus (7, 10) est utilisé en tant que réseau de communication.

7. Procédé selon la revendication 6,
**caractérisé en ce qu'** un système de bus IEEE 1394 (bus Firewire) est installé en tant que système de bus (7, 10).

8. Procédé selon l'une quelconque des revendications précédentes,
**caractérisé en ce que** des fonctions, composées d'au moins une instruction destinée à commander l'autre appareil dans un langage pouvant être traité automatiquement, ainsi que des paramètres, des gammes de valeurs, des définitions et des fonctions temporelles sont mémorisées dans l'au moins un autre appareil.

9. Appareil dans un réseau de communication dans un véhicule automobile, l'appareil comportant un logiciel d'exploitation,
**caractérisé en ce que** le logiciel comporte un module de contrôle générique au moyen duquel des données mémorisées dans au moins un autre appareil du réseau de communication peuvent être recherchées et au moyen duquel un composant de contrôle respectif spécifique aux appareils peut être produit pour au moins un autre appareil, et cet au moins cet autre appareil peut être commandé par l'intermédiaire du composant de contrôle spécifique aux appareils.

10. Procédé selon la revendication 9,
**caractérisé en ce que** l'appareil qui comporte le logiciel d'exploitation est une passerelle (4,8).

11. Autre appareil selon la revendication 9 ou 10,
**caractérisé en ce que** l'au moins un autre appareil comporte une mémoire avec les données spécifiques aux appareils, les données pouvant être recherchées sur le réseau de communication dans le véhicule automobile, et les données peuvent être utilisées pour produire le composant de contrôle spécifique aux appareils.
